# EUROPÄISCHE PATENTANMELDUNG

(11) **EP 3 396 654 A1**
(43) Veröffentlichungstag der Anmeldung: **31.10.2018**
(21) Anmeldenummer: 18151521.4
(22) Anmeldetag: 12.01.2018
(51) Int. Cl.: G09B 23/28, G09B 23/34

(54) **VORRICHTUNG ZUM TRAINIEREN DER REINIGUNG DES ANALBEREICHS**

(30) Priorität: 13.01.2017 DE 202017100163 U
(71) Anmelder: Schultze e.K., 51147 Köln (DE)
(72) Erfinder: Schultze, Kai, 51147 Köln (DE)
(74) Vertreter: Limbeck, Achim

(57) **Zusammenfassung**

Die vorliegende Erfindung betrifft eine Vorrichtung zum Trainieren der Reinigung des Analbereichs, die dadurch gekennzeichnet ist, dass sie einen Formkörper (1) mit zwei dem menschlichen Gesäß nachempfundenen Wölbungen (10,11) und einem sich zwischen den Wölbungen (10,11) erstreckenden Schlitz (13) umfasst, wobei der Formkörper (1) auf seiner den Wölbungen (10,11) gegenüberliegenden Seite (14) eine im Wesentlichen flächige Ausbildung der Oberfläche und/oder des Randbereiches aufweist.

## Beschreibung

### Technisches Gebiet

Die vorliegende Erfindung betrifft eine Vorrichtung zum Trainieren der Reinigung des Analbereichs.

### Stand der Technik

Gemäß dem aktuellem Stand der Technik sind für Kleinkinder zum Erlernen des selbständigen und sorgfältigen Reinigens des Analbereichs, insbesondere nach dem Stuhlgang verschiedene Lernanleitungen in Kinderbüchern, Lehranleitungen für Eltern und Puppen bekannt.

Nachteilig hierbei ist letztendlich vor allem die Schwierigkeit, einem Kleinkind den Vorgang plausibel zu vermitteln, zumal die Anleitung in der Regel voraussetzt, dass das Kleinkind den zu erlernenden Vorgang tatsächlich in der Praxis wiederholt umsetzt, was aus diversen Gründen umständlich und unpraktikabel ist. Zudem ist es wohl der unangemessenste Zeitpunkt, einem Kleinkind den Vorgang zu vermitteln, nachdem es gerade sein großes Geschäft verrichtet hat.

Die Verwendung von Puppen, wie dies teilweise in der Lehre vorgeschlagen wird, erweist sich für die Umsetzung in der Praxis als absolut untauglich, da der Säuberungsvorgang hier aus einer komplett anderen Perspektive und Position durchgeführt wird. Den Vorgang an einer Puppe zu simulieren, erweist sich damit als ebenso unvorteilhaft.

### Darstellung der Erfindung

Der vorliegenden Erfindung liegt die Aufgabe zu Grunde, eine Vorrichtung zu schaffen, welche die vorgenannten Probleme ausräumt und welche geeignet ist, dem Kleinkind den korrekten Reinigungsvorgang in der Praxis bestenfalls unter Aufsicht wiederholt durchführen zu lassen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Erfindungsgemäß ist eine Vorrichtung der eingangs genannten Art dadurch gekennzeichnet, dass sie einen Formkörper mit zwei dem menschlichen Gesäß nachempfundenen Wölbungen und einem sich zwischen den Wölbungen erstreckenden Schlitz umfasst, wobei der Formkörper auf seiner den Wölbungen gegenüberliegenden Seite eine im Wesentlichen flächige Ausbildung der Oberfläche und/oder des Randbereiches aufweist.

In Angrenzung zum Stand der Technik sieht die vorliegende Erfindung somit ein anatomisch geformtes Lehrmodell vor, dass sich vorzugsweise mittels eines geeignetes Befestigungselements spielerisch umschnallen lässt. Besonders vorteilhaft wird die Vorrichtung in der Praxis mit einer speziellen Übungspaste versehen, welche den Stuhlgang simuliert und an dem man den unbeschwerten Umgang mit dem Abwischen des Hinterteils sehr gut üben kann.

Durch die spezielle Beschaffenheit des erfindungsgemäßen Lehrmodells, welche vorzugsweise aus naturnahem Kautschuk oder ähnlichen Materialen hergestellt ist, und der Paste, lassen sich die bestehenden Herausforderungen sehr realitätsnah - aber ohne Infektions- oder Verschmutzungsgefahr üben.

Die vorliegende Vorrichtung hat den Vorteil, dass sie jederzeit und überall zu Übungszwecken eingesetzt werden kann. Die Vorrichtung kann sexuell nicht übergriffig wirken, da sie vorzugsweise über der Kleidung getragen wird. Den Kindern wird damit das Gefühl von mehr Selbstständigkeit vermittelt und die Vorrichtung verhindert massiv der Verbreitung von Madenwürmern, die in 95% aller Kitas vorkommen.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die Vorrichtung in perspektivischer Rückansicht;
Fig.2 die Vorrichtung in der Rückansicht;
Fig.3 die Vorrichtung in der Draufsicht mit einem Befestigungselement;
Fig.4 die Vorrichtung in der Seitenansicht;
Fig.5 die Vorrichtung in perspektivischer Frontansicht;
Fig.6 die Vorrichtung in perspektivischer Rückansicht in einer weiteren Ausführungsform.

### Ausführung der Erfindung

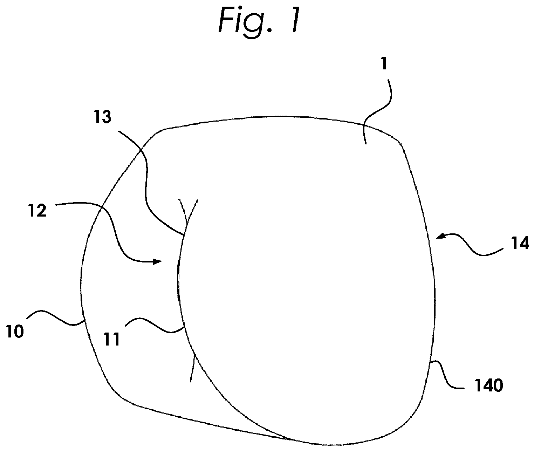

Wie aus Fig.1 ersichtlich, umfasst die erfindungsgemäße Vorrichtung einen Formkörper 1 mit zwei dem menschlichen Gesäß nachempfundenen Wölbungen 10,11 sowie einen sich zwischen den beiden Wölbungen 10,11 erstreckenden Schlitz 13. Der Formkörper 1 ist vorzugsweise zumindest im Bereich der beiden Wölbungen 10,11, speziell im Bereich zwischen den beiden Wölbungen 10,11 flexibel und/oder elastisch ausgebildet, um dem Kleinkind einen möglichst realistischen Abwischvorgang zu vermitteln.

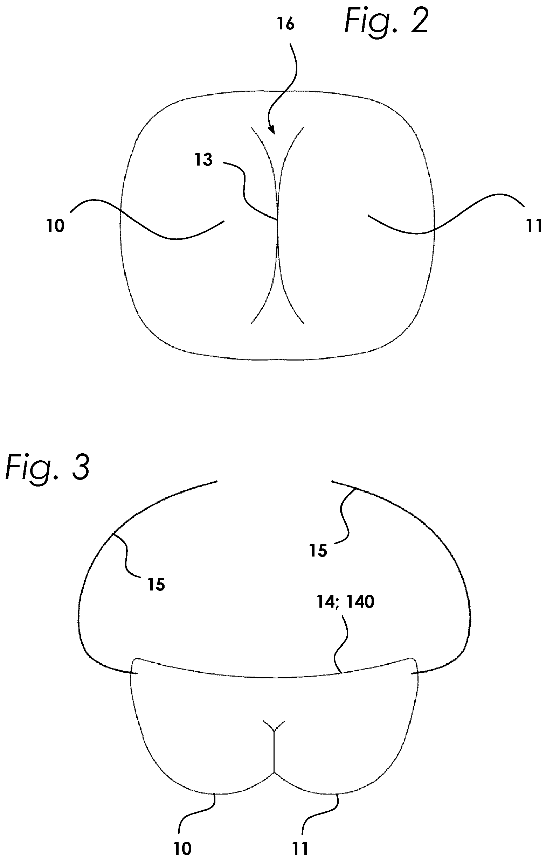

Wie insbesondere aus Fig.2 ersichtlich, sind die beiden Wölbungen 10,11 im Schlitzbereich 12 vorzugsweise kurvenförmig gekrümmt und ganz besonders bevorzugt bikonkav 16 ausgebildet, um so die Form eines menschlichen Gesäßes möglichst realitätsnah nachzubilden.

Der Formkörper 1 weist auf seiner den Wölbungen 10,11 gegenüberliegenden Seite 14 eine im Wesentlichen flächige Ausbildung der Oberfläche und/oder des Randbereiches auf. Diese im Wesentlichen flächige Ausbildung erlaubt es, den Formkörper 1 vorzugsweise im Bereich des Gesäßes eines Kleinkindes zu platzieren, um auch hier eine möglichst realistische Ausgangsposition für den Abwischvorgang zu schaffen.

Zur Gewichts- und Materialersparnis, aber auch aus Gründen der leichteren Handhabung kann der Formkörper 1 auf der den Wölbungen 10,11 gegenüberliegenden Seite 14 hohl ausgebildet sein.

Der Formkörper 1 ist auf der den Wölbungen 10,11 gegenüberliegenden Seite 14 vorzugsweise zur Anordnung an ein menschliches Gesäß ausgebildet, also dem menschlichen Gesäß entsprechend korrespondierend ausgebildet. Hierzu kann der Formkörper 1 vorzugsweise mindestens eine den menschlichen Gesäßwölbungen entsprechend korrespondierende, nach innen gerichtete Wölbung oder Ausnehmung aufweisen.

In einer weiteren Ausführungsform der Erfindung ist der Formkörper 1 auf der den Wölbungen 10,11 gegenüberliegenden Seite 14 an seinem Randbereich 140 zur Anordnung an ein menschliches Gesäß ausgebildet, bspw. gemäß der Ausgestaltung eines auf der Seite 14 hohlen Formkörpers 1.

Wie aus Fig.3 ersichtlich, umfasst die erfindungsgemäße Vorrichtung vorzugsweise mindestens ein am menschlichen Körper und/oder an einem Bekleidungsstück reversibel anordbares Befestigungselement 15.

Dieses Befestigungselement 15 ist vorzugsweise als ein flexibles und/oder elastisches, band- oder seilartiges Mittel zur Umfassung des menschlichen Rumpfes ausgebildet.

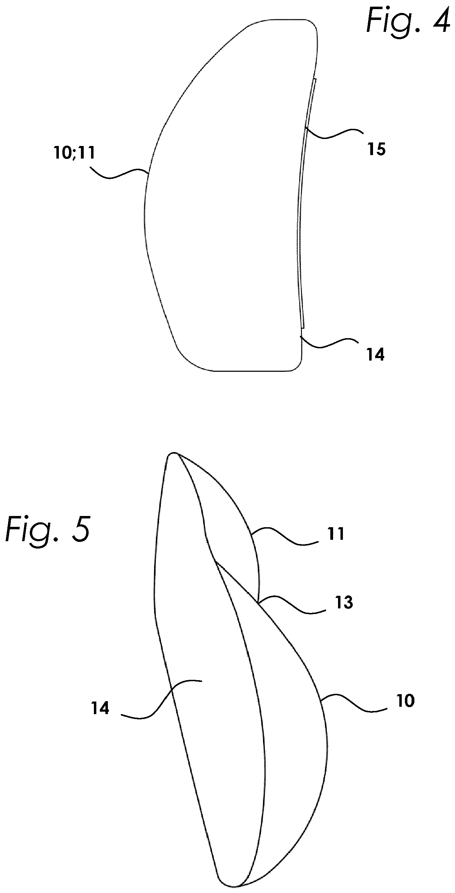

In einer weiteren in Fig.4 dargestellten Ausführungsform der Erfindung ist es denkbar, den Formkörper 1 mit weiteren reversiblen Befestigungselementen 15 wie bspw. einer Klett- oder einer Knopfverbindung an dem menschlichen Rumpf zu befestigen.

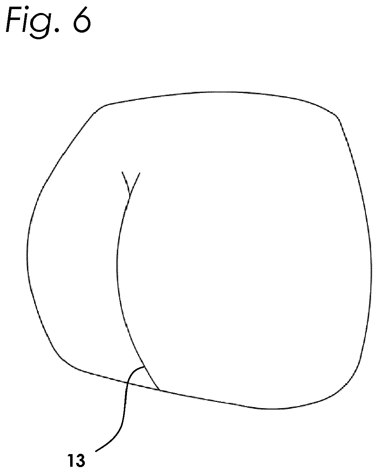

In der in Fig.6 dargestellten Ausführungsform des Formkörpers 1 verlaufen hier die Formen der Wölbungen 10,11 in ihrem unteren Bereich geradlinig bis etwa zum unteren Ende des Formkörpers 1.

Die erfindungsgemäße Vorrichtung beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Formkörper
- 10,11: Wölbungen
- 12: Schlitzbereich
- 13: Schlitz
- 14: den Wölbungen gegenüberliegende Seite
- 15: Befestigungselement
- 16: bikonkaver Verlauf
- 140: Randbereich der den Wölbungen gegenüberliegenden Seite

## Patentansprüche

1. Vorrichtung zum Trainieren der Reinigung des Analbereichs,
**dadurch gekennzeichnet, dass**
sie einen Formkörper (1) mit zwei dem menschlichen Gesäß nachempfundenen Wölbungen (10,11) und einem sich zwischen den Wölbungen (10,11) erstreckenden Schlitz (13) umfasst, wobei der Formkörper (1) auf seiner den Wölbungen (10,11) gegenüberliegenden Seite (14) eine im Wesentlichen flächige Ausbildung der Oberfläche und/oder des Randbereiches aufweist.

2. Vorrichtung nach Anspruch 1,
**dadurch gekennzeichnet, dass**
die beiden Wölbungen (10,11) im Schlitzbereich (12) kurvenförmig gekrümmt sind.

3. Vorrichtung nach Anspruch 2,
**dadurch gekennzeichnet, dass**
die beiden Wölbungen (10,11) bikonkav ausgebildet sind.

4. Vorrichtung nach einem der vorangegangenen Ansprüche,
**dadurch gekennzeichnet, dass**
der Formkörper (1) auf der Seite (14) hohl ausgebildet ist.

5. Vorrichtung nach einem der vorangegangenen Ansprüche,
**dadurch gekennzeichnet, dass**
der Formkörper (1) auf der Seite (14) zur Anordnung an ein menschliches Gesäß ausgebildet ist.

6. Vorrichtung nach Anspruch 5,
**dadurch gekennzeichnet, dass**
der Formkörper (1) mindestens eine den menschlichen Gesäßwölbungen entsprechend korrespondierende, nach innen gerichtete Wölbung oder Ausnehmung aufweist.

7. Vorrichtung nach einem der vorangegangenen Ansprüche,
**dadurch gekennzeichnet, dass**
der Formkörper (1) auf der Seite (14) an seinem Randbereich (140) zur Anordnung an ein menschliches Gesäß ausgebildet ist.

8. Vorrichtung nach einem der vorangegangenen Ansprüche,
**dadurch gekennzeichnet, dass**
der Formkörper (1) zumindest bereichsweise flexibel und/oder elastisch ausgebildet ist.

9. Vorrichtung nach einem der vorangegangenen Ansprüche,
**dadurch gekennzeichnet, dass**
der Formkörper (1) aus naturnahem Kautschuk oder ähnlichen Materialen hergestellt ist.

10. Vorrichtung nach einem der vorangegangenen Ansprüche,
**dadurch gekennzeichnet, dass**
sie mindestens ein am menschlichen Körper und/oder an einem Bekleidungsstück reversibel anordbares Befestigungselement (15) umfasst.

11. Vorrichtung nach Anspruch 10,
**dadurch gekennzeichnet, dass**
das Befestigungselement (15) als ein flexibles und/oder elastisches, band- oder seilartiges Mittel zur Umfassung des menschlichen Rumpfes ausgebildet ist.
